(19) **Europäisches Patentamt / European Patent Office / Office européen des brevets**

(11) **EP 1 855 100 A1**

(12) **EUROPEAN PATENT APPLICATION**
published in accordance with Art. 158(3) EPC

(43) Date of publication:
**14.11.2007 Bulletin 2007/46**

(51) Int Cl.:
**G01N 21/17** (2006.01)    **G01N 33/483** (2006.01)
**G01N 33/68** (2006.01)

(21) Application number: **06714706.6**

(22) Date of filing: **27.02.2006**

(86) International application number:
**PCT/JP2006/303569**

(87) International publication number:
**WO 2006/093077 (08.09.2006 Gazette 2006/36)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.03.2005 JP 2005057253**

(71) Applicant: **MATSUSHITA ELECTRIC INDUSTRIAL CO., LTD.**
**Osaka 571-8501 (JP)**

(72) Inventor: **MATSUZAKI, Hirofumi**
**Chuo-ku, Osaka-shi, Osaka 540-6319 (JP)**

(74) Representative: **Grünecker, Kinkeldey, Stockmair & Schwanhäusser**
**Anwaltssozietät**
**Maximilianstrasse 58**
**80538 München (DE)**

(54) **PROTEIN CRYSTAL DETECTING DEVICE AND PROTEIN CRYSTAL DETECTING METHOD**

(57) A protein crystal detection method for detecting protein crystals in a protein solution held in a crystallization vessel. A plurality of cross sections of the protein solution are photographed to form layer images, and each of the layer images is formed into a crystal characteristic image by extracting the characteristic portions of protein crystals. Determining parameters are calculated from layer information which is obtained by digitizing the number of pixels and the number of labels in the characteristic portions. The determining parameters include the number of typical pixels indicating the number of pixels of a layer image having the largest characteristic portion, the number of typical average pixels for each label, and the inter-layer invariability indicating the ratio of the number of pixels in the characteristic portions between two adjacent layers. In crystallization determination, these determining parameters are compared with determining thresholds to distinguish protein crystals from other products by their difference in thickness, thereby determining the growth status of the protein crystals. This provides an apparatus and method for detecting protein crystals with high precision.

FIG. 12

EP 1 855 100 A1

**Description**

TECHNICAL FIELD

The present invention relates to an apparatus and method for detecting protein crystals grown in a protein solution held in a crystallization vessel.

BACKGROUND ART

In recent years, there have been increasing efforts to make good use of genetic information in medical and other fields. As its basic technique, it has been tried to determine the structure of a protein that makes up a gene. The protein structure analysis specifies the conformation of amino acids composing a protein by X-ray crystal structure analysis, the amino acids being linked in a sequence having a 3D structure.

The protein structure analysis is performed by crystallizing a protein to be analyzed, and one known method for crystallizing a protein is vapor diffusion. In this method, a solvent component evaporated from a protein solution containing a protein to be crystallized is absorbed in a crystallization solution held in the same vessel as the protein solution. The protein solution is kept in a supersaturated state, allowing protein crystals to grow slowly.

Optimum crystal growth conditions for accelerating crystallization are theoretically unknown. Therefore, the optimum conditions are determined by screening in which a number of tests are performed systematically while changing various conditions. The conventional screening requires a target protein solution to be repeatedly tested in various crystal growth conditions which are different in the type, concentration, and growth temperature of the crystallization solution.

These tests are performed by introducing a protein solution and a crystallization solution in a crystallization vessel such as a microplate designed for crystallization; storing the crystallization vessel in a thermostatic chamber at a specific temperature; and monitoring the progress of crystallization and observing the presence or absence of crystals.

This observation process to detect protein crystals takes a lot of time and effort. As one approach to increase the efficiency of the observation process, Japanese Patent Unexamined Publication No. 2004-323336 suggests a protein crystal detection apparatus. This apparatus photographs images of a protein solution so that the examiner can observe the photographed images instead of visually observing a protein solution under a microscope and digitizing and recording the progress of crystallization of the protein solution. This protein crystal detection apparatus includes a camera for photographing images of a protein solution to be observed and performs recognition processing of the images so as to detect the characteristic portions of protein crystals.

The conventional art, however, has a problem in terms of precision in detecting protein crystals in a solution as follows. In the crystal growth process by vapor diffusion, the protein solution contains not only protein crystals but also other solid foreign objects such as precipitates that have not been crystallized. However, it is difficult for the aforementioned protein crystal observation apparatus to clearly distinguish the protein crystals to be detected from other amorphous products such as precipitates which have been solidified before being crystallized. This makes the apparatus difficult to always obtain sufficient precision in detecting protein crystals.

SUMMARY OF THE INVENTION

The present invention has an object of providing an apparatus and method for detecting protein crystals with high precision.

The protein crystal detection apparatus of the present invention for detecting a protein crystal contained in a protein solution held in a crystallization vessel, the protein crystal detection apparatus includes an observation stage on which a crystallization vessel to be observed is set; a camera for photographing a plurality of cross sections of the protein solution on the observation stage at different positions in the focusing direction, thereby capturing a plurality of layer images; an observed-image storage for storing the plurality of layer images captured by the camera; a crystal characteristic image formation part for forming a crystal characteristic image for each of the layer images by extracting the characteristic portion of the protein crystal from each of the layer images stored in the observed-image storage; a layer information extraction part for determining layer information for each of the layer images by digitizing the characteristic portion of the protein crystal contained in the crystal characteristic image; and a crystallization determination part for determining the growth status of the protein crystal contained in the protein solution based on the layer information of each layer image alone and the correlation of the layer information between the cross sections of adjacent ones of the layer images.

The protein crystal detection method of the present invention for detecting a protein crystal contained in a protein solution held in a crystallization vessel includes: an image capturing process for photographing a plurality of cross sections of the protein solution at different positions in the focusing direction on an observation stage on which a crystallization vessel to be observed is set, thereby capturing a plurality of layer images; an image storage process for storing the plurality of layer images thus captured; a crystal characteristic image formation process for forming a crystal characteristic image for each of the layer images by extracting a characteristic portion of the protein crystal from each of the layer images; a layer information extraction process for determining layer information for each of the layer images by digitizing the characteristic portion of the protein crystal contained in the crystal characteristic image; and a crystallization determination process for determining the growth status of the protein crystal contained in the protein solution based on the layer information of each layer image alone and the correlation of the layer information between the cross sections of adjacent ones of the layer images.

According to the present invention, a plurality of cross sections of a protein solution are photographed to capture layer images, and each layer image is formed into a crystal characteristic image containing the characteristic portions of the protein crystals. The characteristic portions of the protein crystals are digitized to determine layer information for each layer image. The growth status of the protein crystal contained in the protein solution is determined based on the layer information of each layer image alone and the correlation of the layer information between adjacent layer images. This allows protein crystals to be clearly distinguished from other products and to be detected with high precision.

BRIEF DESCRIPTION OF THE DRAWINGS

Fig. 1 is a perspective view of a protein crystal detection apparatus of an embodiment of the present invention.
Fig. 2 is a transparent perspective view of the protein crystal detection apparatus of the embodiment of the present invention.
Fig. 3 is a cross sectional view of the protein crystal detection apparatus of the embodiment of the present invention.
Fig. 4 is a perspective view of a crystallization plate used in the protein crystal detection apparatus of the embodiment of the present invention.
Fig. 5 is a partial sectional view of the crystallization plate used in the protein crystal detection apparatus of the embodiment of the present invention.
Fig. 6A is a partial sectional view of an observation section of the protein crystal detection apparatus of the embodiment of the present invention.
Fig. 6B is an enlarged partial sectional view of the crystallization plate used in the protein crystal detection apparatus of the embodiment of the present invention.
Fig. 7 is a partial sectional view of another crystallization plate used in the protein crystal detection apparatus of the embodiment of the present invention.
Fig. 8 is a block diagram showing structure of a control system of the protein crystal detection apparatus of the embodiment of the present invention.
Fig. 9 is a functional block diagram showing the processing function of the protein crystal detection apparatus of the embodiment of the present invention.
Fig. 10 is a flowchart showing an observation operation of the protein crystal detection apparatus of the embodiment of the present invention.
Fig. 11 is a flowchart showing a protein crystal detection method of the embodiment of the present invention.
Fig. 12 is a flowchart showing a crystallization determination process in the protein crystal detection method of the embodiment of the present invention.
Fig. 13A is a partial sectional view of the crystallization plate used in the protein crystal detection apparatus of the embodiment of the present invention.
Fig. 13B is a partial sectional view of the crystallization plate used in the protein crystal detection apparatus of the embodiment of the present invention.
Fig. 14 is a view showing a layer image in the protein crystal detection method of the embodiment of the present invention.
Fig. 15 is a view showing a layer differential image in the protein crystal detection method of the embodiment of the present invention.
Fig. 16 is a view showing a layer differential image (mask processed) in the protein crystal detection method of the embodiment of the present invention.
Fig. 17 is a view showing a thinned layer image in the protein crystal detection method of the embodiment of the present invention.
Fig. 18 is a view showing a layer differential image (noise removed) in the protein crystal detection method of the embodiment of the present invention.
Fig. 19 is a view showing a layer binary image in the protein crystal detection method of the embodiment of the present invention.
Fig. 20A is a view showing a layer binary image in the protein crystal detection method of the embodiment of the present invention.

Fig. 20B is a view showing a layer binary image in the protein crystal detection method of the embodiment of the present invention.

Fig. 21A is a view showing a layer binary image in the protein crystal detection method of the embodiment of the present invention.

Fig. 21B is a view showing a layer binary image in the protein crystal detection method of the embodiment of the present invention.

REFERENCE MARKS IN THE DRAWINGS

| | |
|---|---|
| 6 | crystallization plate |
| 6a | well |
| 6b | liquid holder |
| 9 | observation section |
| 9b | observation stage |
| 10 | camera |
| 12 | crystallization solution |
| 13 | protein solution |
| 13a | protein crystal |
| 21b | observed-image storage |
| 34 | layer information extraction part |
| 42 | crystal characteristic image formation part |
| 43 | crystallization determination part |

DETAILED DESCRIPTION OF PREFERRED EMBODIMENT

The following is a description of an embodiment of the present invention with reference to accompanying drawings.

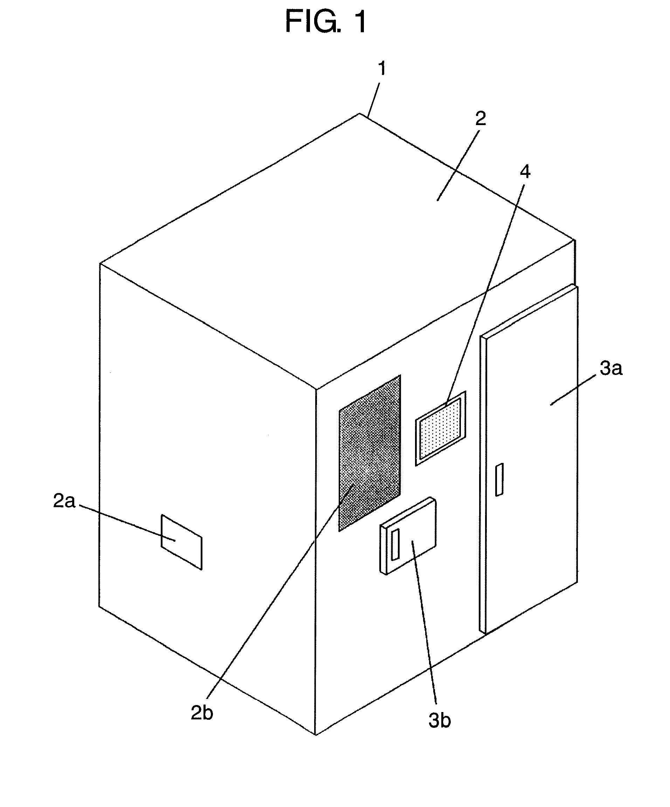

With reference to Figs. 1, 2, and 3, the overall structure of a protein crystal detection apparatus of the present invention will be described as follows. Protein crystal detection apparatus 1 is an apparatus used specifically for detecting protein crystals grown in a protein solution by vapor diffusion.

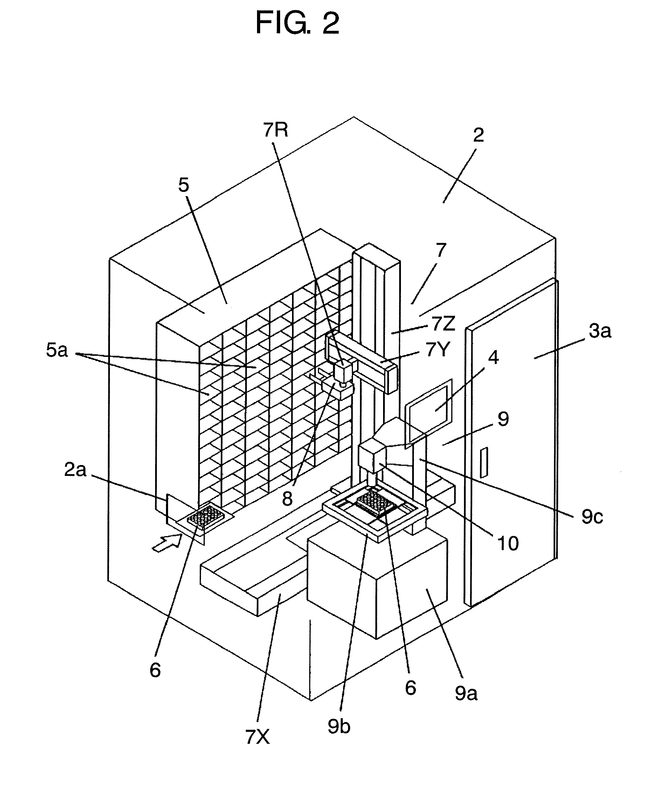

As shown in Figs. 1 and 2, protein crystal detection apparatus 1 includes storage section 5, transport unit 7, and observation section 9 which are housed in thermostatic chamber 2 having a box shape. Thermostatic chamber 2 is provided with a temperature-controlling function to keep the internal atmosphere at a predetermined temperature. As shown in Fig. 1, thermostatic chamber 2 is provided on its front surface with door 3a for internal access, small door 3b for operation and inspection from the front side, window 2b for internal inspection, and so-called touch-panel control panel 4 having a display panel and an operation input section integrated with each other. Thermostatic chamber 2 is further provided on a side surface with receiving entrance 2a through which an object to be observed is carried inside. Receiving entrance 2a can be opened by a receiving-entrance opening mechanism (unillustrated).

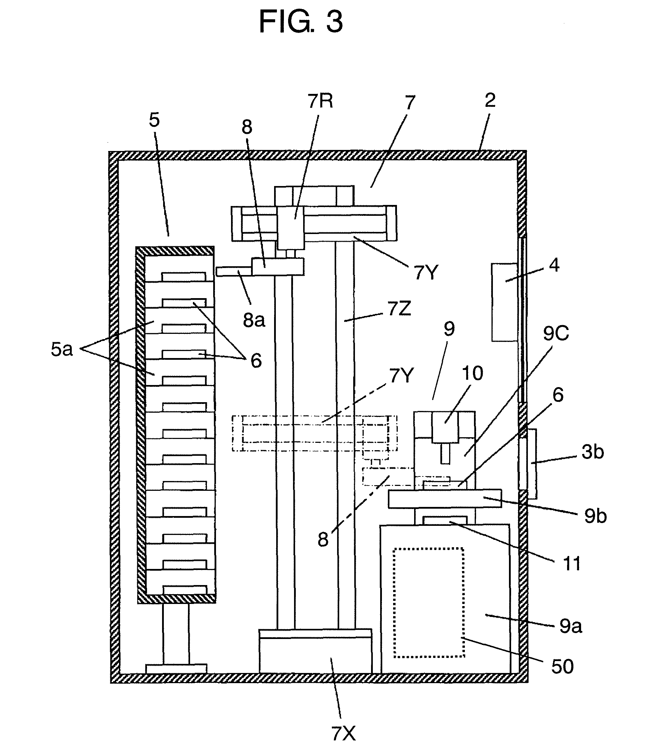

The internal structure of thermostatic chamber 2 will be described as follows with reference to Figs. 2 and 3. Thermostatic chamber 2 includes storage section 5 which has a vertical ledge structure and is on the back wall. Storage section 5 includes a plurality of partitioned storage areas 5a, and each storage area 5a stores one microplate 6 designed for crystallization (hereinafter referred to simply as, "crystallization plate 6"). Crystallization plate 6 is a crystallization vessel where protein contained in the protein solution is crystallized.

Storage section 5 is provided on its front surface with transport unit 7, which includes X-table 7X, Y-table 7Y, Z-table 7Z, swivel head 7R, and plate-holding head 8. X-table 7X is extended in X-direction (parallel to storage section 5) horizontally on the floor. Z-table 7Z is installed vertically on X-table 7X, and Y-table 7Y is installed horizontally on Z-table 7Z. Y-table 7Y is equipped with swivel head 7R whose rotation axis is provided with plate-holding head 8. Driving X-table 7X, Y-table 7Y, and Z-table 7Z allows plate-holding head 8 to move in X-, Y-, and Z-directions across the front surface of storage section 5. Driving swivel head 7R can change the direction of holding head 8 in the horizontal direction.

Plate-holding head 8, which can thus move in the X-, Y-, and Z-directions, holds crystallization plate 6 received through receiving entrance 2a with arm 8a and stores it in a specified one of storage areas 5a in storage section 5. Crystallization plate 6 stored in this storage area 5a for a predetermined period of time is held by plate-holding head 8 and carried to observation section 9. Transport unit 7 is transport means to transport crystallization plate 6 between storage section 5 and observation stage 9b.

Observation section 9 includes base 9a, frame 9c installed vertically on base 9a, observation stage 9b attached horizontally to frame 9c, and camera 10 installed above observation stage 9b. On observation stage 9b is set crystallization plate 6 carried by plate-holding head 8. Driving the XYZ movement mechanism, which is provided on observation stage 9b, allows crystallization plate 6 to move in the X-, Y-, and Z-directions. Camera 10 observes the protein solution on crystallization plate 6 set on observation stage 9b and captures image data.

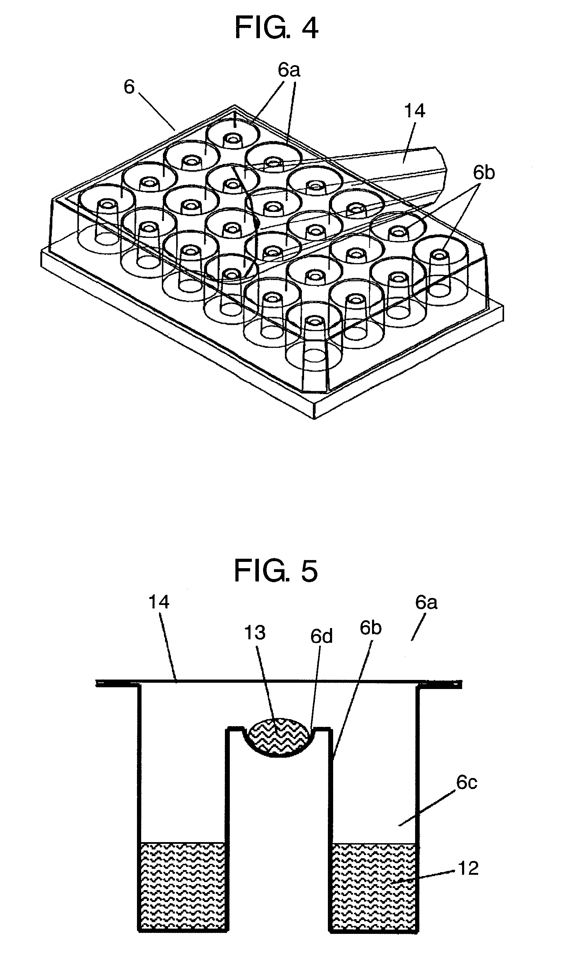

With reference to Figs. 4 and 5, crystallization plate 6 will be described as follows. As shown in Fig.4, crystallization plate 6 has a plurality of wells 6a arranged in a grid pattern. Wells 6a are caldera-like circular concave vessels for liquid storage, which have columnar liquid holder 6b in the center. Wells 6a each contain a sample for crystallization, that is, dispensed protein solution 13 containing the protein to be crystallized and dispensed crystallization solution 12.

Fig. 5 shows a cross section of one of wells 6a containing the sample. In this well 6a, a drop of protein solution 13 is held in pocket 6d formed at the top of liquid holder 6b, and crystallization solution 12 is held in ring-shaped reservoir 6c surrounding liquid holder 6b. As will be described later, when a crystallization process is started, a predetermined amount of crystallization solution 12 is taken out of reservoir 6c and dispensed into protein solution 13 held in liquid holder 6b so as to be mixed together. Then, sealing member 14 is applied to seal the top surfaces of wells 6a (refer to Fig. 4). Sealing member 14 used in Fig. 4 is transparent.

Crystallization plate 6 in this state is stored at a predetermined temperature to evaporate the solvent component in protein solution 13. The evaporation of the solvent component increases the protein concentration of protein solution 13 to a supersaturated state, resulting in the growth of protein crystals. The evaporation of the solvent from protein solution 13 proceeds gradually while the solvent evaporated from protein solution 13 and the vapor absorbed in crystallization solution 12 are kept in equilibrium. This allows crystals to be grown in a stable manner.

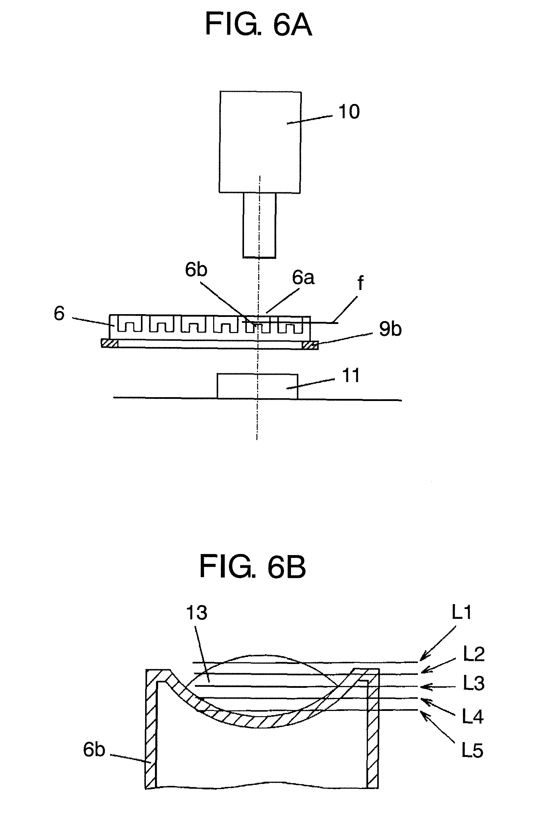

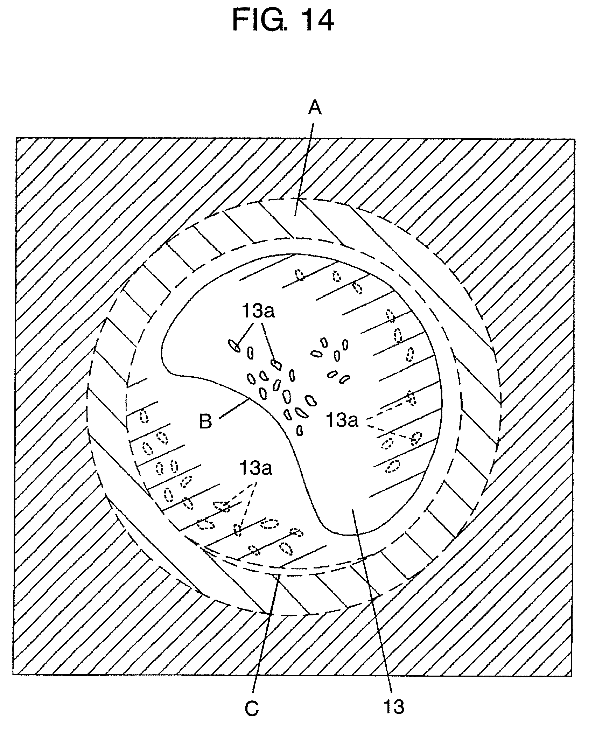

Observation section 9 observes crystallization plate 6 in this crystal growth process to detect the presence or absence of protein crystals and the progress of crystallization in each well 6a. As shown in Fig. 6A, crystallization plate 6 set on observation stage 9b is moved in the horizontal direction until it comes under camera 10. Liquid holder 6b of well 6a to be observed is then aligned with the optical axis of camera 10. Observation stage 9b is then lifted to make a cross section of well 6a to be photographed at the same vertical level as the focal point "f" of camera 10. Crystallization plate 6 is photographed by camera 10 while illuminator 11 emits light from below. As a result, a layer image (refer to Fig. 14) of the protein solution held in crystallization plate 6 is captured.

While protein solution 13 is being thus photographed by camera 10, the Z-position of observation stage 9b can be adjusted to photograph the image of an arbitrary horizontal cross section of protein solution 13 held in the concave portion of well 6a. More specifically, protein solution 13 is photographed by camera 10 while observation stage 9b is moved in the focusing direction (Z-direction) at a predetermined pitch. As a result, as shown in Fig. 6B, the images of layers L1, L2, L3, L4 and L5 (hereinafter referred to simply as "layer images") showing horizontal cross sections of protein solution 13 at different positions in the focusing direction are captured separately. In other words, camera 10 photographs a plurality of cross sections of protein solution 13 held on observation stage 9b at different positions in the focusing direction, and captures layer images showing these cross sectional images.

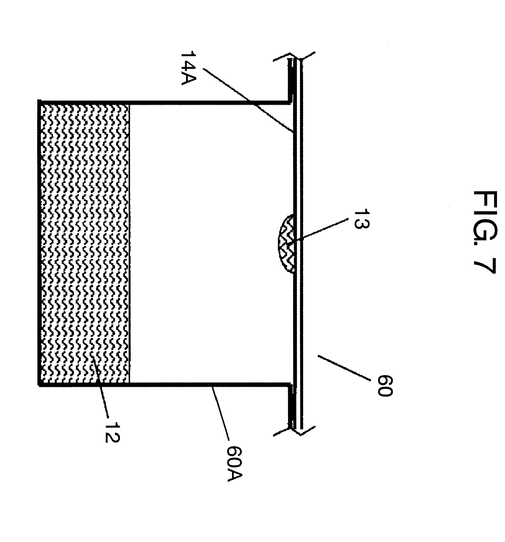

Crystallization plate 6 shown in Figs. 4 and 5 is designed to be used in sitting-drop vapor-diffusion where protein solution 13 is supported from below in the crystal growth process. Alternatively, crystallization plate 60 having the well shape shown in Fig. 7 can be used. Crystallization plate 60 is designed to be used in hanging-drop where a drop of protein solution 13 is held in a hung state.

In crystallization plate 60, well 60A only has a reservoir for storing crystallization solution 12 but not a liquid holder. A drop of protein solution 13 (mixed with a predetermined amount of crystallization solution 12) to be crystallized is held in a hung state on the rear side of glass plate 14A, which seals well 60A. More specifically, glass plate 14A with a drop of protein solution 13 applied thereon is turned over and placed to seal well 60A into which crystallization solution 12 has been dispensed.

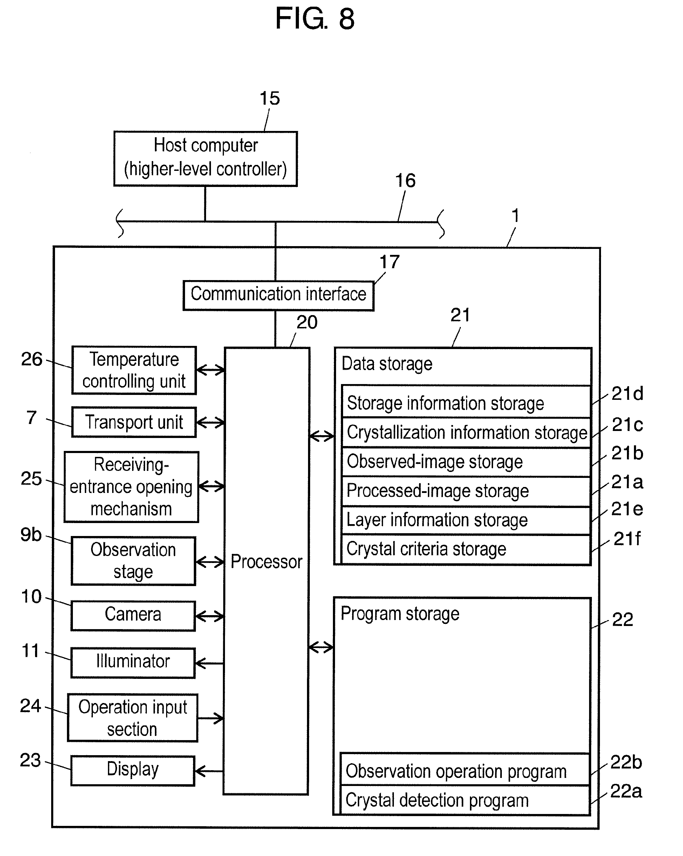

The following is a description of a control system of the protein crystal detection apparatus with reference to Fig. 8. In Fig. 8, protein crystal detection apparatus 1 includes communication interface 17. Communication interface 17 transmits and receives control signals to and from processor 20 and host computer 15 via LAN system 16. Processor 20 performs control processing in protein crystal detection apparatus 1, and host computer 15 is a higher-level controller.

Processor 20 performs various operations and processing functions, which will be described later, by executing various processing programs stored in program storage 22 based on various data stored in data storage 21. Processor 20 performs crystal detection program 22a and observation operation program 22b stored in program storage 22 so that the observation operation of the protein solution and the detection process of protein crystals in the protein solution can be performed as described later.

Data storage 21 includes processed-image storage 21a, observed-image storage 21b, crystallization information storage 21c, storage information storage 21d, layer information storage 21e, and crystal criteria storage 21f.

Processed-image storage 21a stores images which have been processed in various ways in the protein crystal detection process.

Observed-image storage 21b stores a plurality of layer images (refer to Fig. 14), which are cross sections of protein solution 13 photographed on observation stage 9b by camera 10 at different positions in the focusing direction. In the protein crystal detection process described later, each layer image stored in observed-image storage 21b is to be processed.

Crystallization information storage 21c stores crystallization information. The crystallization information includes the image data of the layer images from which crystals have been detected in the protein crystal detection process; the information to identify the plate and well from which the layer images have been captured; and the time when the plate has been observed.

Storage information storage 21d stores the storage information of crystallization plates 6 in storage section 5. The storage information is plate arrangement data indicating the correspondence between each storage area 5a and each crystallization plate 6.

Layer information storage 21e stores the characteristic portions of the protein crystals contained in an image (hereinafter referred to simply as "crystal characteristic image") formed from a layer image by a series of image processing operations which will be described later. The term "characteristic portions of protein crystals" means information obtained by digitizing the portions which could be determined to be protein crystals in a crystallization determination process described later (hereinafter referred to simply as "layer information").

Crystal criteria storage 21f stores threshold data used as criteria in the crystallization determination process, which determines the growth status of protein crystals in the protein solution based on the layer information stored in layer information storage 21e.

Processor 20 is connected to display 23, operation input section 24, camera 10, illuminator 11, observation stage 9b, receiving-entrance opening mechanism 25, transport unit 7, and temperature controlling unit 26. Temperature controlling unit 26 controls the temperature of thermostatic chamber 2 in accordance with the temperature instruction transmitted from host computer 15 via processor 20. As a result, the temperature in thermostatic chamber 2 is kept at a predetermined temperature.

Transport unit 7 performs transport operations of crystallization plates 6 within thermostatic chamber 2 in accordance with the control signal from processor 20. The transport operations include storing crystallization plate 6 received through receiving entrance 2a of thermostatic chamber 2 to a predetermined storage area 5a of storage section 5; taking crystallization plate 6 out of storage area 5a; and setting on observation section 9.

Receiving-entrance opening mechanism 25 opens and closes receiving entrance 2a in accordance with the control signal from processor 20.

Processor 20 controls observation stage 9b, illuminator 11, and camera 10 so as to move crystallization plate 6 held on observation stage 9b; to illuminate crystallization plate 6 by illuminator 11; and to capture images of the protein solution by camera 10.

Display 23 displays layer images captured by camera 10, images processed in various ways, guidance images at data entry, and the like on the display panel of control panel 4.

Operation input section 24 operates an input device such as control panel 4 so as to provide processor 20 with operational commands or data input.

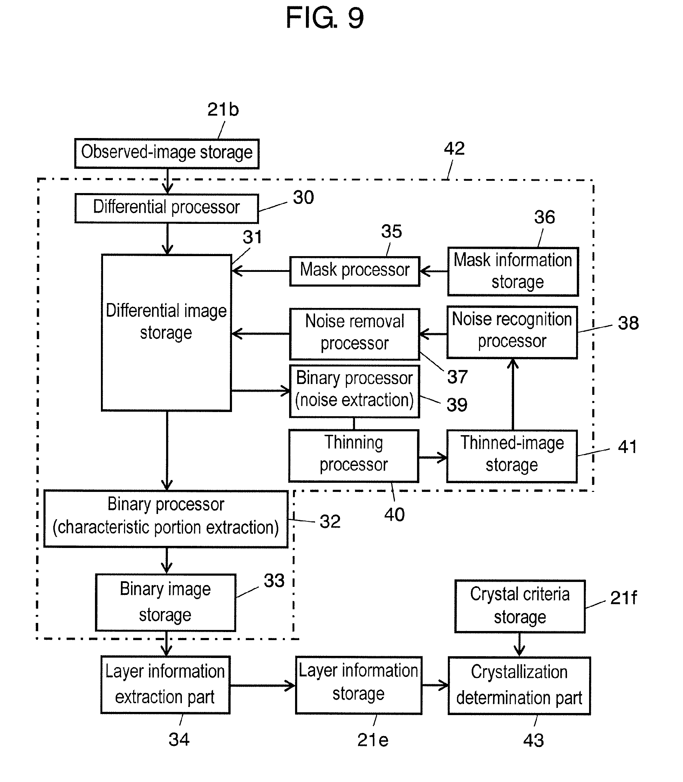

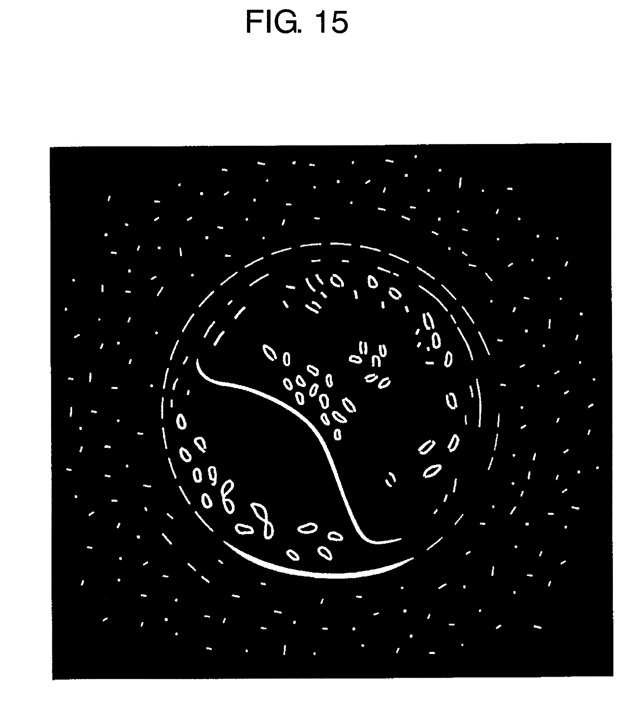

The following is a description of the function of the protein crystal detection process with reference to the functional block diagram of Fig. 9. In Fig. 9, differential processor 30 differentiates a layer image (refer to Fig. 14) stored in observed-image storage 21b, thereby forming a layer differential image (refer to Fig. 15). The layer differential image consists of luminance change information indicating the magnitude of luminance change. The luminance change information is indicated by the numerical value of the rate of luminance change (luminance change value) in each pixel composing a layer image.

In a layer image, the luminance change is small in regions having no object to be observed, such as a background region and a region through which illumination light has passed, and is large in regions corresponding to the outlines of protein crystals to be detected. Therefore, in the aforementioned layer differential image, the outlines of the objects to be observed that have been taken into the image are extracted as portions having a large luminance change. However, portions having a large luminance change that are extracted in the layer differential image include not only the protein crystals as the detection target, but also solid foreign objects such as precipitates present in the protein solution. The portions having a large luminance change further include the cross-sectional shape of liquid holder 6b and the outline of the drop in well 6a. To address this problem, a noise removal process (described later) is performed to remove as noises the portions having a large luminance change other than the detection target.

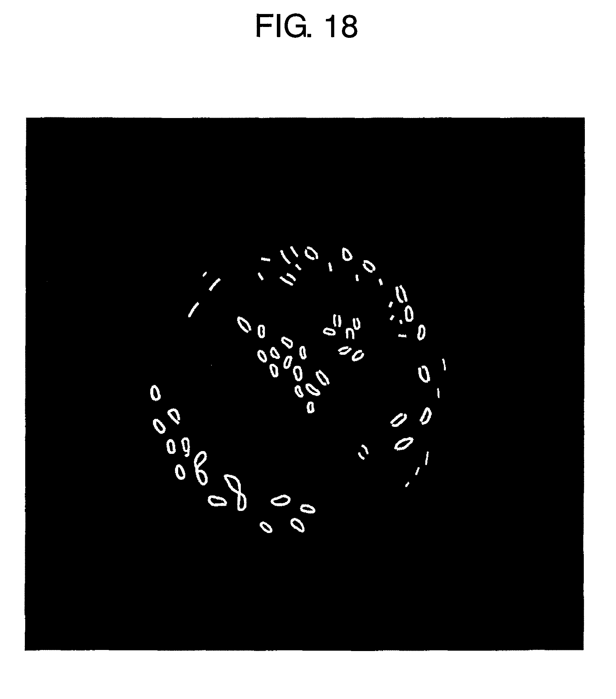

Differential image storage 31 stores a layer differential image formed by differential processor 30. Binary processor 32 binarizes the layer differential image stored in differential image storage 31 using a threshold for characteristic portion extraction so as to form a layer binary image (refer to Fig. 18). In the layer binary image, of all the luminance change information, the luminance change information that indicates a large luminance change is left as the aforementioned characteristic portions.

Binary image storage 33 stores the layer binary image formed by binary processor 32. The layer differential image which is to be binarized by binary processor 32 is subjected to the mask process and the noise removal process described below. Prior to the noise removal process, a binary process for noise extraction and a thinning process are performed for the purpose of recognizing noises to be removed.

The mask process will be described first as follows.

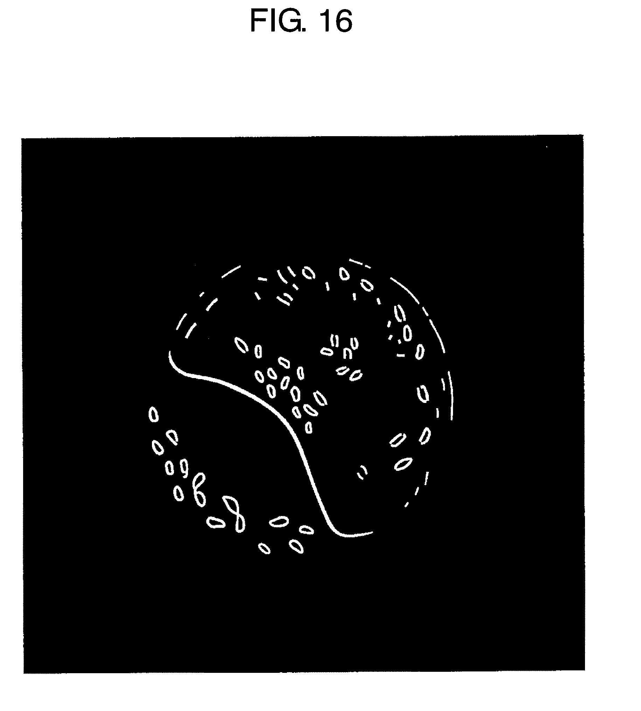

Mask information storage 36 stores mask information, which is used to remove from a differential image a vessel noise derived from the cross-sectional shape of crystallization plate 6, out of the noises contained in a layer image of the protein solution to be observed. The term "mask information" means the diameter of the pocket formed in liquid holder 6b. The term "vessel noise" means the luminance change information that appears in a layer differential image by being derived from the cross-sectional shape of crystallization plate 6 (the cross-sectional shape of liquid holder 6b), which is a crystallization vessel for holding a protein solution in a layer image. Mask processor 35 performs a mask process to remove the vessel noise from the differential image, based on the mask information stored in mask information storage 36. This results in a layer differential image from which the vessel noise has been removed (refer to Fig. 16).

Next, the noise removal process will be described as follows.

The noise removal process performed here is applied to noises that cannot be removed by the aforementioned mask process, for example, noises that cannot be predicted such as the outline of the drop of the protein solution in pocket 6d on the top of liquid holder 6b. Therefore, noise recognition processor 38 recognizes which portions correspond to noises from the information in the differential image. Noise removal processor 37 removes noises from the differential image based on the results of the noise recognition. This results in a layer differential image from which noises have been removed (refer to Fig. 16). The approach used here for noise recognition is to form a layer differential image into a thinned layer image and then to distinguish lines as follows. The lines including the outlines of protein crystals are distinguished from the other lines such as the outline of the drop of protein solution 13 which are clearly different from the lines showing protein crystals, based on the geometrical features of the lines appearing in the thinned layer image.

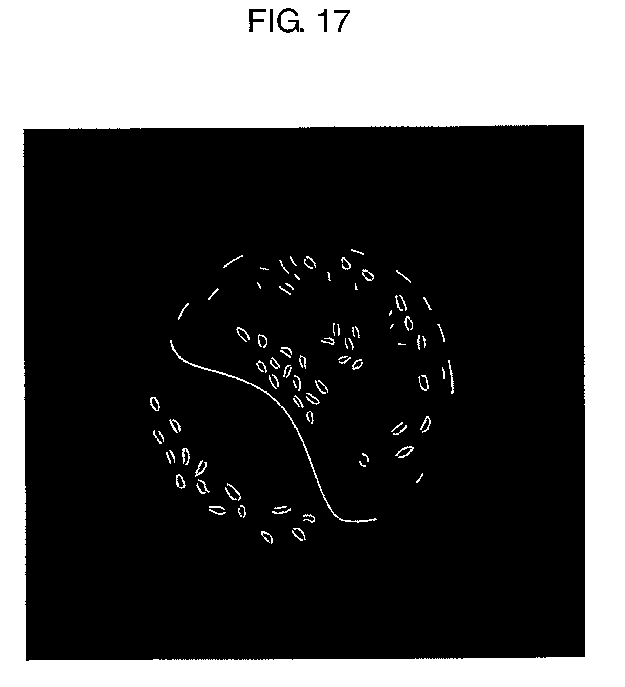

In this noise recognition, binary processor 39 first binarizes the layer differential image stored in differential image storage 31 using the threshold for noise extraction. Thinning processor 40 then thins the layer binary image thus binarized. More specifically, thinning processor 40 replaces each line element in the layer binary image by a thin line with a one-pixel width. This results in a thinned layer image in which the portions having a large luminance change in the layer differential image are formed of thin lines (refer to Fig. 17). The thinned layer image thus formed is stored in thinned-image storage 41.

Noise recognition processor 38 recognizes the shape of each line contained in the thinned layer image of thinned-image storage 41 and detects the lines that are considered as noises.

Noise removal processor 37 removes the luminance change information corresponding to the lines that are considered as noises and detected by noise recognition processor 38 from the layer differential image stored in differential image storage 31.

As an approach to detect the lines that are considered as noises by noise recognition processor 38, a plurality of algorithms briefly described as follows are used. A first algorithm determines the lengths and number of branches of lines, and considers as noises the lines that are longer than a predetermined value and have a small number of branches. A second algorithm recognizes the lengths and linearity of the lines and considers as noises the lines that are longer than a predetermined value and have a high linearity. A third algorithm determines the lengths of lines and the dispersion of the approximated straight line of the lines, and considers as noises the lines that are longer than a predetermined value and have a small dispersion. Noise recognition processor 38 uses these three algorithms either separately or together depending on application.

In the vessel noise removal process by mask processor 35 and the noise removal process by noise removal processor 37, the differential images stored in differential image storage 31 are the objects to be processed; however, the layer binary images stored in binary image storage 33 can be alternatively processed.

Layer information extraction part 34 extracts the aforementioned layer information from the layer binary images stored in binary image storage 33. Layer information storage 21e stores the layer information thus extracted. Crystallization determination part 43 determines the growth status of protein crystals in the protein solution based on the layer information stored in layer information storage 21e.

The components inside the chain-line frame shown in Fig. 9 are collectively referred to as crystal characteristic image formation part 42. The components are as follows: differential processor 30, differential image storage 31, binary processor 32, binary image storage 33, mask processor 35, mask information storage 36, noise removal processor 37, noise recognition processor 38, binary processor 39, thinning processor 40, and thinned-image storage 41. Crystal characteristic image formation part 42 forms layer binary images, one from each layer image stored in observed-image storage 21b. The layer binary image is a crystal characteristic image containing the extracted characteristic portions of protein crystals.

In the present embodiment, differential processor 30, binary processor 32, mask processor 35, noise removal processor 37, noise recognition processor 38, binary processor 39, and thinning processor 40 are functions performed by processor 20 when it executes crystal detection program 22a. Differential image storage 31, binary image storage 33, and thinned-image storage 41 are included in processed-image storage 21a. It is alternatively possible that processor 20, communication interface 17, data storage 21, and program storage 22 are mounted on computer 50 shown in Fig. 3. The position and number of computer 50 to be installed are not limited to the example shown in Fig. 3. It is also possible to use an external server or an external computer via the Internet.

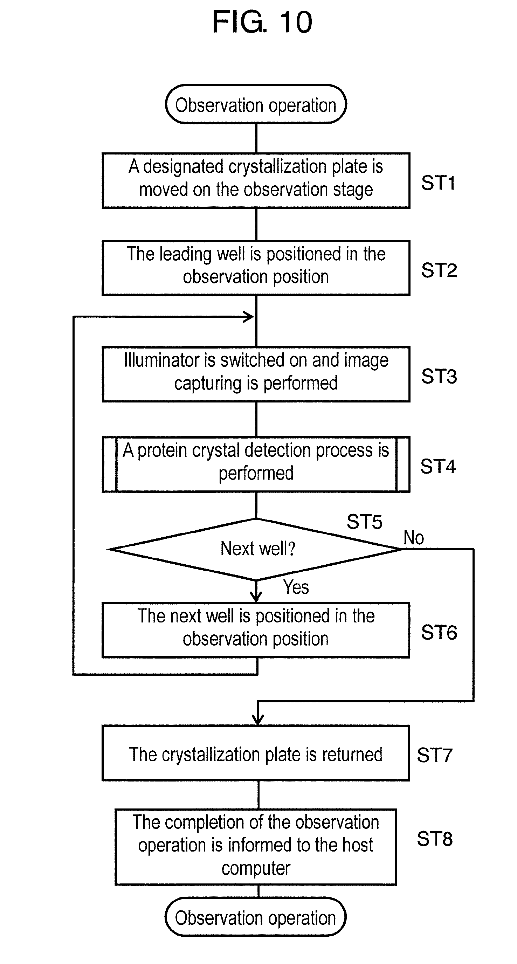

The protein crystal detection apparatus 1 thus structured performs an observation operation as in the flowchart of Fig. 10 so as to detect protein crystals. The observation operation is performed by the execution of observation operation program 22b by processor 20. When the observation operation is started, crystallization plate 6 received through receiving entrance 2a from the upstream device is stored in storage area 5a.

In Fig. 10, a designated one of crystallization plates 6 is taken out of storage section 5 and moved on observation stage 9b by transport unit 7 (ST1). The leading well 6a is positioned in the observation position right under camera 10 (ST2). Illuminator 11 is switched on and image capturing is performed by camera 10 (ST3). More specifically, a plurality of cross sections of protein solution 13 held in crystallization plate 6 are photographed on observation stage 9b at different positions in the focusing direction so as to capture the layer images (image capturing process). The layer images thus captured are stored in observed-image storage 21b (image storage process).

After this, a protein crystal detection process described later is performed based on the layer images stored in observed-image storage 21b (ST4). When the protein crystal detection process for this well is complete, the presence or absence of a next well is determined (ST5). When the next well is present, the well is positioned in observation position (ST6), and the process goes back to Step ST3 to repeat the same process. On the other hand, when "no next well" is determined at Step ST5, crystallization plate 6 which has undergone the process is returned to storage area 5a (ST7). The completion of the observation operation is informed to host computer 15 (ST8) to complete the execution of the observation operation.

All the processes in the aforementioned observation operation can be performed without taking crystallization plates 6 out of thermostatic chamber 2. Unlike the way of taking the crystallization plate out every time it is observed, the aforementioned observation operation causes no temperature change in the crystallization plate and thus no variation in the crystal growth conditions, thereby improving screening precision. Furthermore, the observation field is prevented from being fogged with moisture condensation which would be caused if the crystallization plate were moved from a cooled state to room temperature. This produces excellent observation results, allowing the observation operation for protein crystal detection to be performed sufficiently and reliably.

The following is a description of the layer images captured at Step ST3 and the protein crystal detection process performed at Step ST4.

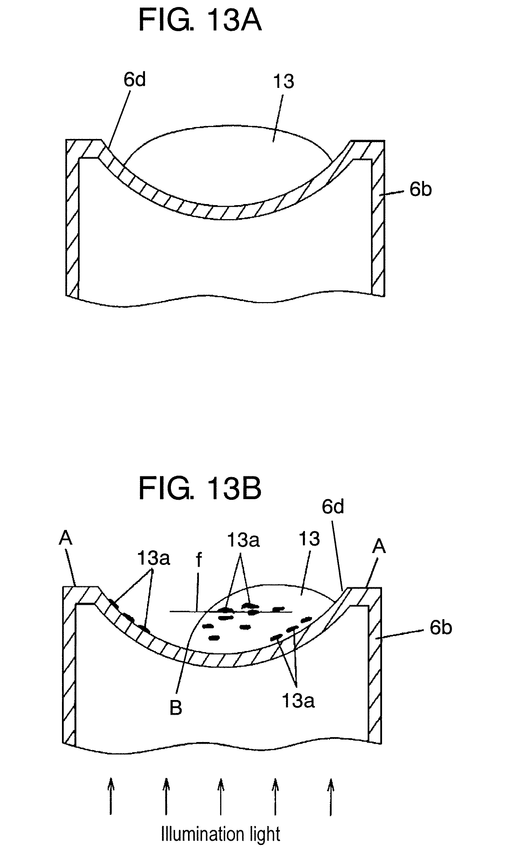

First, changes with time in protein solution 13 which is the object to be observed will be described with reference to Fig. 13. As described earlier, when the crystal growing process is started, a drop of protein solution 13 containing a predetermined ratio of crystallization solution 12 is placed on liquid holder 6b of well 6a (refer to Fig. 5). Fig. 13A shows a cross section of liquid holder 6b in the initial phase of the crystal growing process. In this phase, pocket 6d of liquid holder 6b is almost filled with the drop of protein solution 13 and no protein crystals are seen in the drop.

When the crystal growth conditions are appropriate, that is, crystallization solution 12 is in desirable conditions in terms of composition, concentration, and storage temperature, protein solution 13 crystallizes with time. Fig. 13B shows a cross section of liquid holder 6b in which protein solution 13 has crystallized to some extent. As the solvent component in protein solution 13 gradually evaporates, the drop in pocket 6d is reduced in size, and as a result, its outline (shown by the arrow B) moves toward the center of pocket 6d compared with the outline shown in Fig.13. Some protein crystals 13a are exposed outside the drop of Fig. 13B on the bottom surface of pocket 6d as a result of the size reduction of the drop, and other protein crystals 13a appear inside the drop.

Fig. 14 shows a layer image in the situation of Fig. 13B. This layer image shows the drop photographed from above when it is reduced in volume as a result that the solvent has evaporated to some extent in pocket 6d. In the layer image shown in Fig. 14, a circular portion "A" (sparsely hatched portion) indicating the top portion of liquid holder 6b appears with comparatively high luminance in the background image (densely hatched portion) with low luminance.

In pocket 6d inside the circular portion "A", the drop of protein solution 13 appears to be an image having different degrees of luminance in different portions thereof. The portions containing no drop inside the circular portion "A" have high luminance because of the illumination light (refer to Fig. 13B) passing through from below. The outline "B" of the drop of protein solution 13 appears clearly in the layer image by the contrast with the high-luminance portion. In addition, another high-luminance portion "C" appears as a line along a part of the inner periphery of the circular portion "A".

Protein crystals 13a to be detected are present in the region inside the circular portion "A". More specifically, of all protein crystals 13a present inside the drop of protein solution 13, protein crystals 13a that are present near the focal point "f" (refer to Fig.13B) of camera 10 are in sharp focus and appear clearly in the layer image shown in Fig. 14. In contrast, protein crystals 13a that are outside the focal point "f" are in poor focus and appear blurred. Protein crystals 13a that are outside the drop on the surface of pocket 6d are also in poor focus and appear blurred. Besides protein crystals 13a, solid foreign objects such as precipitates which have not been crystallized also appear burred in the layer image. Note that protein crystals 13a that appear blurred are shown in broken lines.

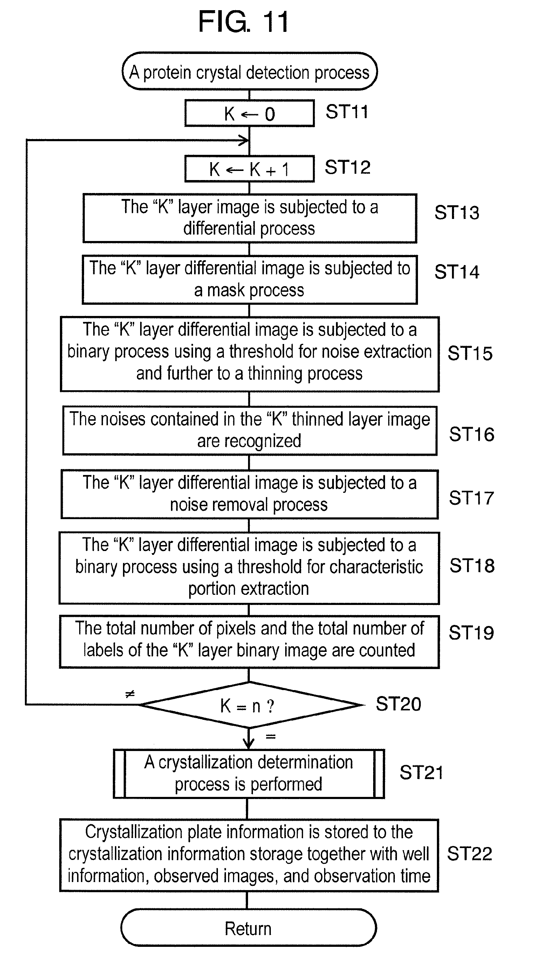

In the detection of protein crystals, these shapes appearing together in a layer image could not be distinguished by visual observation, making it impossible to achieve a reliable and efficient detection of the protein crystals of the detection target. To address this problem, in the protein crystal detection method of the present embodiment, processor 20 executes crystal detection program 22a stored in program storage 22. Crystal detection program 22a applies a protein crystal detection process of the flowchart of Fig. 11 to a plurality of layer images (refer to layers L1 to L5 shown in Fig. 6B) so as to automatically distinguish protein crystals.

As shown in Fig. 11, when the process is started, the counter value "K" for designating a layer number is set to the initial value 0 (ST11), and then the counter value "K" is incremented by 1 (ST12). After this, the following process is performed.

First, the layer images are subjected to a differential process (ST13). More specifically, the layer images of the protein solution previously stored in observed-image storage 21b are subjected to a differential process so as to form a layer differential image consisting of luminance change information indicating the size of luminance change. The layer differential image of Fig. 15 shows portions having a large luminance change with high luminance. The portions having a large luminance change correspond to the outlines of protein crystals 13a, the outline "B" of the drop, and the high-luminance portion "C" formed along a part of the inner periphery of the circular portion "A" in the layer image of Fig. 14. Note that although it is a multi-level image in which each pixel normally appears with a brightness corresponding to the luminance change value, a layer differential image is illustrated as a black-and-white binary image for the convenience of illustration in Fig. 15.

Next, the layer differential image is subjected to a mask process (ST14). The luminance change information derived from liquid holder 6b of crystallization plate 6 holding protein solution 13 is removed as the vessel noise from the layer differential image. The vessel noise removal is performed by removing the luminance change information of a predetermined region without the possibility of containing protein solution 13 in the layer differential image, based on the mask information which is the cross-sectional shape of liquid holder 6b of crystallization plate 6 already predicted.

Of all the luminance change information in the layer differential image of Fig.15, the portions having a large luminance change that are outside the region containing protein solution 13 are removed as noises. These portions correspond to the portions having a large luminance change including and outside the inner periphery of the circular portion "A" of Fig. 14. This results in a layer differential image (mask processed) shown in Fig. 16, which includes exclusively the region that may contain protein crystals.

The layer differential image thus subjected to the mask process is subjected to a binary process using a threshold for noise extraction and further to a thinning process (ST15). Fig. 17 shows a thinned layer image obtained by the thinning process. In the thinned layer, the high-luminance portions in the layer differential image, such as the outlines of protein crystals 13a and the outline of the drop are all replaced by thin lines with a one-pixel width.

The noises contained in the thinned layer image thus formed are recognized (ST16). More specifically, the shape of each line contained in the thinned layer image is recognized separately so as to detect the lines that are considered as noises. Then, the layer differential image is subjected to a noise removal process (ST17). In other words, the lines considered as noises and detected at Step ST16 are removed from the layer differential image which has been subjected to the binary process. Fig. 18 shows a layer partial image (noise removed) formed by the noise removal process.

Then, the characteristic portions that are most likely protein crystals are extracted as follows. First, the layer differential image (noise removed) is subjected to a binary process using a threshold for characteristic portion extraction (ST18). This results in a layer binary image where the luminance change information showing a large luminance change is left as the characteristic portions. The threshold used here is set to be higher than the aforementioned threshold for noise extraction.

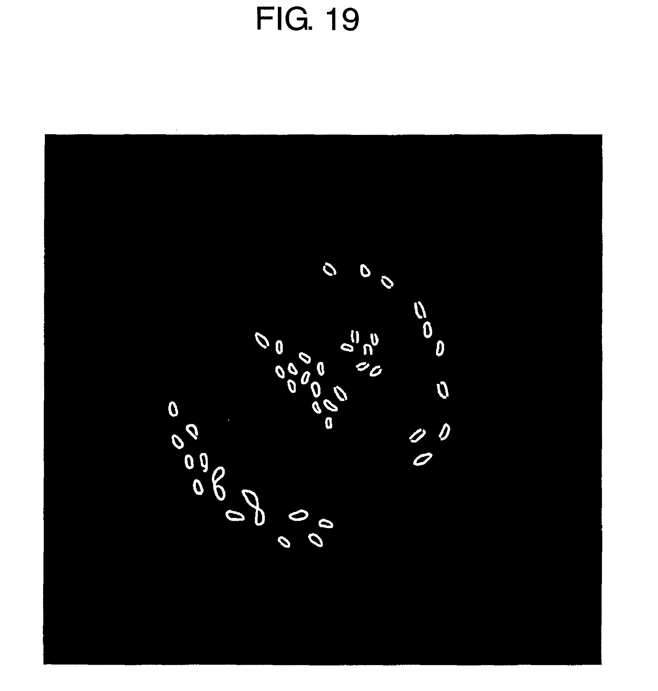

The binary process also involves labeling of the characteristic portions, leaving the labels of the characteristic portions whose areas are larger than a predetermined level, and removing the other labels. As a result, the characteristic portions that have a small chance of being protein crystals are considered as noises and removed. Fig. 19 shows a layer binary image thus formed. The image shown in Fig. 19 contains exclusively the characteristic portions that are most likely protein crystals. In other words, the layer binary image is a crystal characteristic image containing the characteristic portions of protein crystals extracted from each layer image. Through Steps ST13 to ST18, each layer image is formed into a crystal characteristic image containing the characteristic portions of protein crystals extracted from each layer image. The layer binary images thus formed are stored in binary image storage 33.

Then, the number of pixels and the number of labels in each layer binary image thus formed are counted (ST19). The number of pixels indicates the total number of pixels in the high-luminance portions corresponding to the characteristic portions, and the number of labels indicates the total number of labels which are each a block of the high-luminance pixels contained in each layer binary image. With these numbers, layer information indicating digitized characteristic portions contained in a crystal characteristic image is determined for each layer image (layer information extraction process). Thus in the present embodiment, the layer information includes at least the number of pixels corresponding to the characteristic portions of protein crystals and the number of labels which are each a block of the pixels.

Table 1 shows an example of the layer information which is determined by the process of Fig.11. In this example, the total number "n" of layers is 5, and the number of pixels and the number of labels are determined for each layer numbered from L1 to L5.

Table 1

| Layer number | Number of pixels | Number of labels |
|:---:|:---:|:---:|
| L1 | 1013 | 36 |
| L2 | 2381 | 71 |
| L3 | 5902 | 184 |
| L4 | 8055 | 268 |
| L5 | 4442 | 174 |

The aforementioned mask process and noise removal process for vessel noise removal may be applied to the layer binary images stored in binary image storage 33. In this case, of all the characteristic portions left in the layer binary images, those corresponding to the lines considered as noises and detected are removed from the layer binary images.

Next, a counter value "K" is referred to and when this value does not reach the total number "n" of layers (n = 5 in Fig. 6B), the process goes back to Step ST12 to perform the processes of Steps ST13 to ST19 for the next layer image. At Step ST20, when the counter value "K" is verified to reach the total number "n" of layers and the process to determine the layer information is complete for all the layer images, a crystal determination process is performed (ST21), and the growth status of protein crystals in the well is determined (crystal determination process). The results of the determination are stored as crystallization plate information to crystallization information storage 21c together with well information, observed images, and observation time (ST22). This is the completion of a protein crystal detection process for one of wells 6a, and then the same process is repeated for another well.

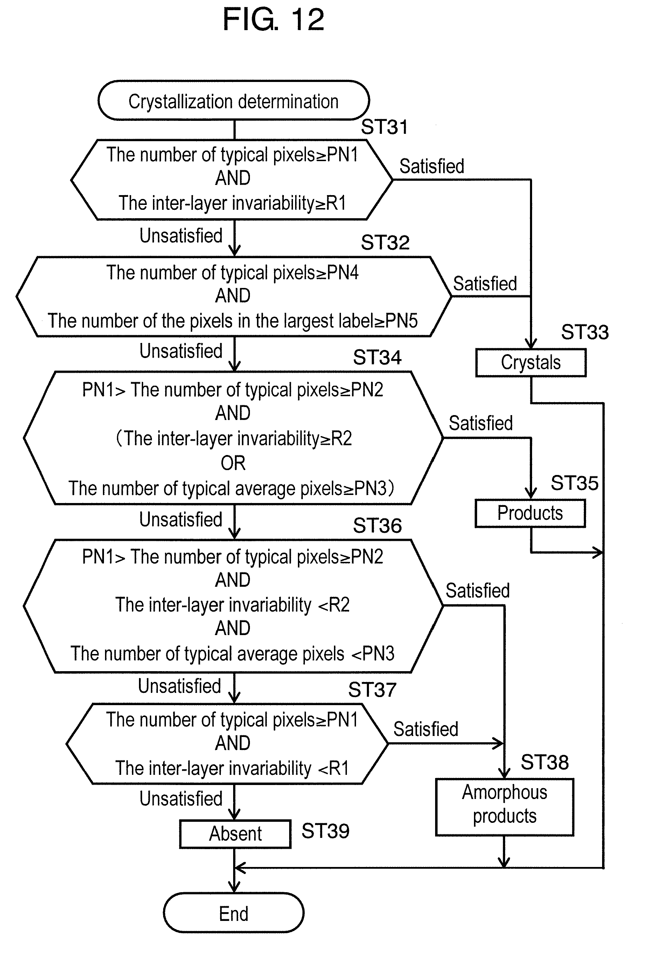

The crystallization determination to determine the growth status of protein crystals at Step ST21 will be described in detail as follows with the flowchart of Fig. 12.

First, terms and symbols used in the following description will be defined as follows. In Table 1 above, the layer corresponding to the layer binary image having the largest number of pixels is defined as the typical layer, which is most likely to contain protein crystals. In Table 1, the typical layer is layer L4. The number of pixels in the characteristic portions of the layer binary image corresponding to the typical layer is defined as the number of typical pixels. Of the two layers vertically adjacent to the typical layer, the layer having the larger number of pixels is defined as the target adjacent layer. The target adjacent layer is selected so as to digitize the correlation between the adjacent layers. The number of pixels contained in the target adjacent layer is defined as the number of pixels of the adjacent layer. In Table 1, Layer L3, which is on and adjacent to typical layer L4, is the target adjacent layer.

The number of pixel blocks (labels) in the characteristic portions of the layer binary image of the typical layer is defined as the number of typical labels. The number of pixels in the largest-sized label of all the layers is defined as the number of the pixels in the largest label. As the number of typical pixels and the number of pixels in the largest-sized label are larger, protein are likely to be more crystallized.

As shown in Formula (1) below, the number of typical average pixels is a value obtained by dividing the number of typical pixels by the number of typical labels, and indicates an average number of pixels per label. A larger number of typical average pixels indicates that the detected characteristic portions are larger in size, which means that protein crystals are more likely to be present.

As shown in Formula (2) below, the inter-layer invariability is a value, expressed in percentage, obtained by dividing the number of pixels in the adjacent layer by the number of typical pixels. The value is determined from the correlation of the layer information between the cross sections of adjacent layer images. As the inter-layer invariability is larger, two adjacent layers are more likely to contain the same material with a certain thickness between them. This means that protein crystals are more likely to be present.

$$\text{number of typical average pixels} = \frac{\text{number of typical pixels}}{\text{number of typical labels}} \quad \cdots \cdots \ (1)$$

$$\text{inter-layer invariability} = \frac{\text{number of pixels of the adjacent layer}}{\text{number of typical pixels}} \times 100 \cdots (2)$$

The inter-layer invariability can be determined to estimate the probability that adjacent two layers contain the same substance. Using the inter-layer invariability as a determining parameter in the crystallization determination makes it possible to distinguish protein crystals having some thickness from amorphous products such as precipitates having a small thickness based on the digitalized data.

The following is a description of the determining parameters used in the crystallization determination process of Fig. 12 and the crystallization criteria data used as determining thresholds. Of the determining parameters defined in the above description, four determining parameters: the number of typical pixels, the number of the pixels in the largest label, the number of typical average pixels, and the inter-layer invariability are used in the crystallization determination process described later. Crystallization determination part 43 shown in Fig. 9 determines the growth status of crystals in the protein solution based on these determining parameters. Of these determining parameters, the number of typical pixels, the number of the pixels in the largest label, and the number of typical average pixels are determined from the layer information of each layer image alone, and the inter-layer invariability is determined from the correlation of the layer information between the cross sections of two adjacent layer images.

These determining parameters have the following determining thresholds. PN1 to PN5 used in Fig. 12 are determining thresholds defined by the number of pixels. More specifically, PN1, PN2, and PN4 are determining thresholds when the number of typical pixels is used as the determining parameter. PN3 and PN5 are determining thresholds when the number of typical average pixels and the number of the pixels in the largest label are used as the parameters, respectively. R1 and R2 are determining thresholds when the inter-layer invariability is used as the determining parameter. In the present embodiment, these determining thresholds have the following initial values.

PN1: 5000 pixels, PN2: 500 pixels, PN3: 40 pixels
PN4: 500 pixels, PN5: 200 pixels, R1: 30%, R2: 40%

The following is a detailed description of the flow of the crystallization determination process.

First, the values of the four determining parameters: the number of typical pixels, the number of the pixels in the largest label, the number of typical average pixels, and the inter-layer invariability are calculated from the layer information of each layer image determined in the process shown in Fig. 11. In Fig. 12, it is first determined whether the following conditions are satisfied: The number of typical pixels is not less than PN1 and the inter-layer invariability is not less than R1 (ST31). When these conditions are satisfied, the characteristic portions corresponding to protein crystals are detected to contain at least a predetermined number of pixels from a two dimensional view, and at least a predetermined percentage of the characteristic portions are assumed to have a thickness large enough to be considered as crystals from a three dimensional view. Thus, the well is determined to contain crystals (ST33), thereby completing the crystallization determination process.

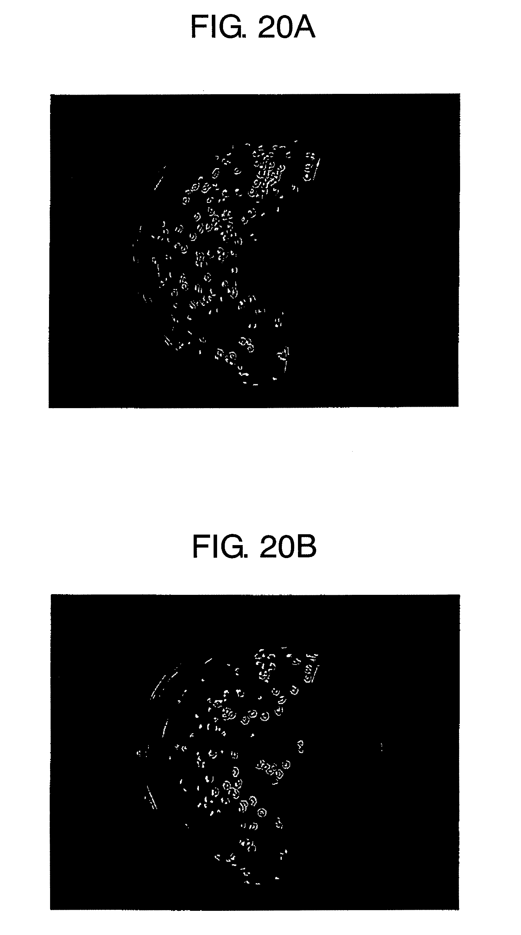

Figs. 20A and 20B show binary layer images of a well which is determined to contain crystals by this crystallization determination algorithm. In the layer binary image of the typical layer shown in Fig.20A, the number of pixels counted exceeds PN1, thereby satisfying the condition that the number of typical pixels is not less than PN1. In the layer binary image of the target adjacent layer shown in Fig. 20B, a pretty large number of pixels are counted. Thus, the inter-layer invariability is high (about 74% in this example), and greatly exceeds R1.

When the aforementioned conditions are not satisfied at Step ST31, the process goes to Step ST32. At Step ST32, it is determined whether the following conditions are satisfied: The number of typical pixels is not less than PN4 and the number of the pixels in the largest label is not less than PN5. When these conditions are satisfied, the characteristic portions corresponding to protein crystals are detected to contain at least a predetermined number of pixels from a two dimensional view, and each label detected has at least a predetermined size. In the same manner as above, the well is determined to contain crystals (ST33), thereby completing the crystallization determination process.

When the aforementioned conditions are not satisfied at Step ST32, the process goes to Step ST34. At Step ST34, it is determined whether the following conditions of Step ST34 are satisfied: The number of typical pixels is not less than PN2 and less than PN1, and either the inter-layer invariability is not less than R2 or the number of typical average pixels is not less than PN3. When these conditions of Step ST34 are satisfied, it is determined that the well contains products that have not been crystallized yet but may be crystallized (ST35), thereby completing the crystallization determination process.

On the other hand, when the predetermined conditions are not satisfied at Step ST34, the process goes to Step ST36. At Step ST36, it is determined whether the following three conditions of Step ST36 are all satisfied: The number of typical pixels is not less than PN2 and less than PN1, the inter-layer invariability is less than R2, and the number of typical average pixels is less than PN3. When these conditions of Step ST36 are satisfied, it is determined that the well contains precipitates other than protein crystals, that is, amorphous products (ST38), thereby completing the crystallization determination process.

On the other hand, when the predetermined conditions are not satisfied at Step ST36, the process goes to Step ST37. At Step ST37, it is determined whether the following conditions of Step ST37 are satisfied: the number of typical pixels is not less than PN1 and the inter-layer invariability is less than R1. When these conditions of Step ST36 are satisfied, it is determined in the same manner as above that the well contains precipitates other than protein crystals, that is, amorphous products (ST38), thereby completing the crystallization determination process.

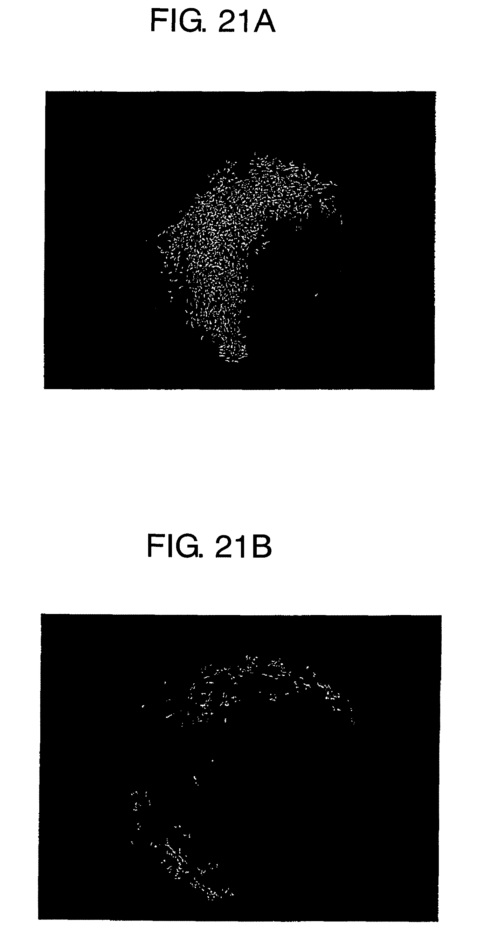

Figs. 21A and 21B shows binary layer images of a well which is determined to contain amorphous products by this crystallization determination algorithm. In the layer binary image of the typical layer shown in Fig.21A, the number of pixels counted exceeds PN1, and the number of typical pixels is not less than PN1. In contrast, in the layer binary image of the target adjacent layer shown in Fig. 20B, only a small number of pixels is counted, so that the inter-layer invariability is low (about 19% in this example) and below R1 (30%).

On the other hand, when the predetermined conditions are not satisfied at Step ST37, it is determined that the well contains neither of protein crystals, products, and amorphous products (ST39), thereby completing the crystallization determination process.

As a result of performing the series of determination shown in Fig. 12, either one of the determination results: "crystals", "products", "amorphous products", and "no crystals or products" is stored as crystallization plate information.

As described hereinbefore, in the crystallization determination process in the protein crystal detection method of the present embodiment, the growth status of crystals in protein solution 13 in well 6a is determined based on determining parameters (1) and determining parameters (2). The determining parameters (1) are determined from the layer information of each layer image alone, and the determining parameters (2) are determined from the correlation of the layer information between the cross sections of adjacent layer images. The determining parameters (1) include the number of typical pixels, the number of the pixels in the largest label, and the number of typical average pixels. The determining parameters (2) include the inter-layer invariability. The growth status of crystals to be determined includes the presence or absence of protein crystals and other products.

This solves the conventional problem in the detection of protein crystals. As a result, protein crystals are clearly distinguished from other products such as precipitates in an image by their difference in thickness, thereby being detected with high precision.

The processes in mask processor 35 and noise removal processor 37 are performed to prevent the characteristic portions of a layer binary image from containing noises in the present embodiment. However, these processes can be omitted if it is possible to form a layer image containing few noises due to the shape of the vessel, the conditions of illumination, and the like. In the present embodiment, the characteristic portions of protein crystals are extracted by a differential process in crystal characteristic image formation part 42. Alternatively, the characteristic portions can be extracted by other methods such as using the color of protein crystals.

INDUSTRIAL APPLICABILITY

The apparatus and method of the present invention for detecting protein crystals have an advantage of precisely distinguishing protein crystals from amorphous products such as precipitates so as to detect protein crystals with high precision. The apparatus and method are useful in protein crystallization process performed prior to protein structure analysis, for example, in the field of biochemistry.

**Claims**

1. A protein crystal detection apparatus for detecting a protein crystal contained in a protein solution held in a crystallization vessel, the protein crystal detection apparatus comprising:

   an observation stage on which a crystallization vessel to be observed is set;
   a camera for photographing a plurality of cross sections of the protein solution on the observation stage at different positions in a focusing direction, thereby capturing a plurality of layer images;

an observed-image storage for storing the plurality of layer images captured by the camera;

a crystal characteristic image formation part for forming a crystal characteristic image for each of the layer images by extracting a characteristic portion of the protein crystal from each of the layer images stored in the observed-image storage;

a layer information extraction part for determining layer information for each of the layer images by digitizing the characteristic portion of the protein crystal contained in the crystal characteristic image; and

a crystallization determination part for determining growth status of the protein crystal contained in the protein solution based on the layer information of each layer image alone and correlation of the layer information between the cross sections of adjacent ones of the layer images.

2. The protein crystal detection apparatus of claim 1, wherein

the crystal characteristic image is a binary image formed by extracting the characteristic portion of the protein crystal; and

the layer information includes at least a number of pixels corresponding to the characteristic portion of the protein crystal and a number of labels which are each a block of the pixels in the binary image.

3. The protein crystal detection apparatus of claim 1 or 2, wherein the crystallization determination part determines a presence or absence of a protein crystal and a product other than the protein crystal.

4. A protein crystal detection method for detecting a protein crystal contained in a protein solution held in a crystallization vessel, the protein crystal detection method comprising:

an image capturing process for photographing a plurality of cross sections of the protein solution at different positions in a focusing direction on an observation stage on which a crystallization vessel to be observed is set, thereby capturing a plurality of layer images;

an image storage process for storing the plurality of layer images thus captured;

a crystal characteristic image formation process for forming a crystal characteristic image for each of the layer images by extracting a characteristic portion of the protein crystal from each of the layer images;

a layer information extraction process for determining layer information for each of the layer images by digitizing the characteristic portion of the protein crystal contained in the crystal characteristic image; and

a crystallization determination process for determining growth status of the protein crystal contained in the protein solution based on the layer information of each layer image alone and correlation of the layer information between the cross sections of adjacent ones of the layer images.

5. The protein crystal detection method of claim 4, wherein

the crystal characteristic image formation process forms a binary image by extracting the characteristic portion of the protein crystal; and

the layer information includes at least a number of pixels corresponding to the characteristic portion of the protein crystal and a number of labels which are each a block of the pixels in the binary image.

6. The protein crystal detection method of claim 4 or 5, wherein

the crystallization determination process determines a presence or absence of a protein crystal and a product other than the protein crystal.

# FIG. 1

# FIG. 2

# FIG. 3

# FIG. 4

# FIG. 5

# FIG. 6A

10

6b    6a    f

6

9b

11

# FIG. 6B

13                                    L1

                                      L2

                                      L3

                                      L4

6b                                    L5

# FIG. 7

# FIG. 8

# FIG. 9

21b

Observed-image storage

42

Differential processor — 30

31

Differential image storage

Mask processor — 35

Mask information storage — 36

Noise removal processor

Noise recognition processor — 38

37

Binary processor (noise extraction)

39

Thinning processor

Thinned-image storage — 41

40

Binary processor (characteristic portion extraction) — 32

Binary image storage — 33

Crystal criteria storage — 21f

Layer information extraction part

Layer information storage

Crystallization determination part

34

21e

43

# FIG. 10

```
         ┌─────────────────────────┐
         │  Observation operation  │
         └─────────────────────────┘
                      │
    ┌─────────────────────────────────────┐
    │ A designated crystallization plate is│   ST1
    │  moved on the observation stage      │
    └─────────────────────────────────────┘
                      │
    ┌─────────────────────────────────────┐
    │ The leading well is positioned in the│   ST2
    │        observation position          │
    └─────────────────────────────────────┘
                      │
        ┌──────────►──┤
        │             │
    ┌───┴─────────────────────────────────┐
    │ Illuminator is switched on and image │   ST3
    │      capturing is performed          │
    └─────────────────────────────────────┘
                      │
    ┌─────────────────────────────────────┐
    │ A protein crystal detection process is│  ST4
    │            performed                  │
    └─────────────────────────────────────┘
                      │
                   ST5│
              ◇───────────────◇         No
              │   Next well?   │──────────┐
              ◇───────────────◇          │
                      │ Yes              │
    ┌─────────────────────────────────────┐│
    │  The next well is positioned in the  ││  ST6
    │       observation position           ││
    └─────────────────────────────────────┘│
        │                                  │
        └──────────────────────────────────┘
                      │
    ┌─────────────────────────────────────┐
    │  The crystallization plate is returned│  ST7
    └─────────────────────────────────────┘
                      │
    ┌─────────────────────────────────────┐
    │ The completion of the observation    │
    │ operation is informed to the host    │   ST8
    │            computer                  │
    └─────────────────────────────────────┘
                      │
         ┌─────────────────────────┐
         │  Observation operation  │
         └─────────────────────────┘
```

# FIG. 11

A protein crystal detection process

| | |
|---|---|
| K ← 0 | ST11 |

| | |
|---|---|
| K ← K + 1 | ST12 |

| | |
|---|---|
| The "K" layer image is subjected to a differential process | ST13 |

| | |
|---|---|
| The "K" layer differential image is subjected to a mask process | ST14 |

| | |
|---|---|
| The "K" layer differential image is subjected to a binary process using a threshold for noise extraction and further to a thinning process | ST15 |

| | |
|---|---|
| The noises contained in the "K" thinned layer image are recognized | ST16 |

| | |
|---|---|
| The "K" layer differential image is subjected to a noise removal process | ST17 |

| | |
|---|---|
| The "K" layer differential image is subjected to a binary process using a threshold for characteristic portion extraction | ST18 |

| | |
|---|---|
| The total number of pixels and the total number of labels of the "K" layer binary image are counted | ST19 |

≠   K = n ?   ST20

=

| | |
|---|---|
| A crystallization determination process is performed | ST21 |

| | |
|---|---|
| Crystallization plate information is stored to the crystallization information storage together with well information, observed images, and observation time | ST22 |

Return

# FIG. 12

```
            ┌──────────────────────────────┐
            │  Crystallization determination │
            └──────────────────────────────┘
                          │              ST31
        ┌─────────────────────────────────────┐
       ╱  The number of typical pixels≥PN1      ╲        Satisfied
      ╱              AND                          ╲──────────────────┐
      ╲     The inter-layer invariability≥R1     ╱                   │
        ╲─────────────────────────────────────╱                     │
                     │ Unsatisfied    ST32                           │
        ┌─────────────────────────────────────────┐                 │
       ╱   The number of typical pixels≥PN4         ╲    Satisfied   │
      ╱              AND                              ╲──────────┐    │
      ╲  The number of the pixels in the largest label≥PN5 ╱    │    │
        ╲─────────────────────────────────────────╱             │    │
                     │ Unsatisfied     ST34              ST33    ▼    │
        ┌─────────────────────────────────────┐       ┌──────────────┐
       ╱   PN1> The number of typical pixels≥PN2 ╲     │   Crystals   │
      ╱              AND                          ╲    └──────────────┘
      ╱    (The inter-layer invariability≥R2       ╲   Satisfied     │
      ╲              OR                             ╱────────┐        │
      ╲  The number of typical average pixels≥PN3) ╱        │   ST35 │
        ╲─────────────────────────────────────────╱         ▼        │
                     │ Unsatisfied     ST36            ┌──────────┐   │
        ┌─────────────────────────────────────┐       │ Products │   │
       ╱  PN1> The number of typical pixels≥PN2 ╲      └──────────┘   │
      ╱              AND                          ╲  Satisfied   │    │
      ╱   The inter-layer invariability <R2        ╲─────────┐   └───▶│
      ╲              AND                            ╱         │        │
      ╲  The number of typical average pixels <PN3 ╱          │        │
        ╲─────────────────────────────────────────╱          │        │
                     │ Unsatisfied    ST37                    │        │
        ┌─────────────────────────────┐                       │        │
       ╱  The number of typical pixels≥PN1 ╲  Satisfied        │        │
      ╱              AND                    ╲─────────────┐     │        │
      ╲   The inter-layer invariability <R1 ╱            │  ST38│        │
        ╲─────────────────────────────────╱              ▼      ▼        │
                     │ Unsatisfied                 ┌──────────────┐      │
              ┌──────────┐                         │  Amorphous   │      │
              │  Absent  │  ST39                    │  products    │      │
              └──────────┘                         └──────────────┘      │
                     │                                     │             │
                     ▼◄──────────────────────────────────┘◄────────────┘
              ┌──────────┐
              │   End    │
              └──────────┘
```

# FIG. 13A

# FIG. 13B

Illumination light

# FIG. 14

# FIG. 15

## FIG. 16

# FIG. 17

# FIG. 18

# FIG. 19

FIG. 20A

FIG. 20B

## FIG. 21A

## FIG. 21B

## INTERNATIONAL SEARCH REPORT

| International application No. |
|---|
| PCT/JP2006/303569 |

**A. CLASSIFICATION OF SUBJECT MATTER**
*G01N21/17*(2006.01), *G01N33/483*(2006.01), *G01N33/68*(2006.01)

According to International Patent Classification (IPC) or to both national classification and IPC

**B. FIELDS SEARCHED**

Minimum documentation searched (classification system followed by classification symbols)
*G01N21/00-21/61*(2006.01), *G01N33/483*(2006.01), *G01N33/68*(2006.01)

Documentation searched other than minimum documentation to the extent that such documents are included in the fields searched
Jitsuyo Shinan Koho          1922-1996     Jitsuyo Shinan Toroku Koho     1996-2006
Kokai Jitsuyo Shinan Koho     1971-2006     Toroku Jitsuyo Shinan Koho     1994-2006

Electronic data base consulted during the international search (name of data base and, where practicable, search terms used)
WPI, JMEDPlus(JOIS), JST7580(JOIS), JSTPlus(JOIS), MEDLINE(JDREAM), Utility Model File(PATOLIS), PATENT FILE(PATOLIS)

**C. DOCUMENTS CONSIDERED TO BE RELEVANT**

| Category* | Citation of document, with indication, where appropriate, of the relevant passages | Relevant to claim No. |
|---|---|---|
| X<br>Y | Biotechnology and Bioengineering, Vol.86, No.4, 20 May, 2004 (20.05.04), pages 389 to 398 | 1,3,4,6<br>2,5 |
| X<br>Y | WO 2003/87326 A  (Kendro Laboratory Products L.P.), 23 October, 2003 (23.10.03), Full text & JP 2005-520174 A | 1,3,4,6<br>2,5 |
| Y | JP 6-94595 A  (Mitsui Mining & Smelting Co., Ltd.), 05 April, 1994 (05.04.94), Full text (Family: none) | 2,5 |

☒  Further documents are listed in the continuation of Box C.          ☐  See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16 March, 2006 (16.03.06) | Date of mailing of the international search report<br>04 April, 2006 (04.04.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/303569

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3-150447 A  (Nippon Steel Corp.),<br>26 June, 1991 (26.06.91),<br>Full text<br>(Family: none) | 2,5 |

Form PCT/ISA/210 (continuation of second sheet) (April 2005)

**EP 1 855 100 A1**

## REFERENCES CITED IN THE DESCRIPTION

**Patent documents cited in the description**

- JP 2004323336 A